# EUROPÄISCHE PATENTSCHRIFT

(11) **EP 2 734 421 B1**
(45) Veröffentlichungstag und Bekanntmachung des Hinweises auf die Patenterteilung: **18.05.2016**
(21) Anmeldenummer: 12731503.4
(22) Anmeldetag: 06.07.2012
(51) Int. Cl.: B60S 1/40, B60S 1/38

(54) **WISCHBLATT MIT EINER ADAPTEREINHEIT ZUR ANLENKUNG AN EINEM WISCHERARM**
WIPER BLADE WITH AN ADAPTOR UNIT FOR COUPLING TO A WIPER ARM
BALAI D'ESSUIE-GLACE DOTÉ D'UNE UNITÉ D'ADAPTATION DESTINÉE À ÊTRE ARTICULÉE AU NIVEAU D'UN BRAS D'ESSUIE-GLACE

(30) Priorität: 20.07.2011 DE 102011079481
(43) Veröffentlichungstag der Anmeldung: 28.05.2014
(73) Patentinhaber: Robert Bosch GmbH, 70442 Stuttgart (DE)
(72) Erfinder: HELLER, Joachim, 77815 Buehl (DE)
(86) Internationale Anmeldenummer: PCT/EP2012/063299
(87) Internationale Veröffentlichungsnummer: WO 2013/010826

(56) Entgegenhaltungen:
- EP-A2- 2 179 901
- WO-A1-2012/031832
- DE-A1-102004 016 016
- FR-A1- 2 842 485

## Beschreibung

### Stand der Technik

Die vorliegende Erfindung betrifft ein Wischblatt für einen Scheibenwischer, mit einer Wischleiste und einer Adaptereinheit zur Anlenkung der Wischleiste an einem Wischerarm, wobei die Adaptereinheit eine an der Wischleiste befestigte Basisanschlussvorrichtung mit einem der Wischleiste zugewandten Wandelement aufweist, an dem mindestens eine abgerundete Auflagefläche für den Wischerarm vorgesehen ist, auf der der Wischerarm zumindest bereichsweise schwenkbar um eine der Auflagefläche zugeordnete Drehachse lagerbar ist.

Aus dem Stand der Technik ist ein derartiges Wischblatt mit einer Wischleiste bekannt, die über eine zugeordnete Adaptereinheit an einem Wischerarm angelenkt wird. Die Adaptereinheit ist dauerhaft an der Wischleiste befestigt und weist ein der Wischleiste zugewandtes Wandelement auf, an dem eine abgerundete Auflagefläche für den Wischerarm vorgesehen ist, auf der der Wischerarm zumindest bereichsweise schwenkbar um eine der Auflagefläche zugeordnete Drehachse gelagert ist. Darüber hinaus ist an dem der Wischleiste zugewandten Wandelement ein bolzenartiges Fixierelement vorgesehen. Dieses greift zur Fixierung des Wischerarms an der Adaptereinheit in eine am Wischerarm vorgesehene Öffnung ein, sodass das Wischblatt über das bolzenartige Fixierelement in axialer Richtung an dem Wischerarm gesichert ist.

Nachteilig an diesem Stand der Technik ist, dass das bolzenartige Fixierelement bei sehr großen darauf einwirkenden Kräften brechen kann. Dies kann dazu führen, dass zumindest die Verbindung in axialer Richtung zwischen Wischblatt und Wischerarm nicht mehr ausreichend gesichert ist und sich im Betrieb des Wischblatts löst.

FR-A-2 842 485 offenbart den Oberbgriff des Anspruchs 1.

### Offenbarung der Erfindung

Eine Aufgabe der Erfindung ist es daher, ein neues Wischblatt für einen Scheibenwischer bereit zu stellen, mit einer Adaptereinheit zur Anlenkung an einem Wischerarm, die eine robuste und solide Verbindung in axialer Richtung zwischen Wischblatt und Wischerarm ermöglicht.

Dieses Problem wird gelöst durch ein Wischblatt für einen Scheibenwischer, mit einer Wischleiste und einer Adaptereinheit zur Anlenkung der Wischleiste an einem Wischerarm. Die Adaptereinheit weist eine an der Wischleiste befestigte Basisanschlussvorrichtung mit einem der Wischleiste zugewandten Wandelement auf, an dem mindestens eine abgerundete Auflagefläche für den Wischerarm vorgesehen ist, auf der der Wischerarm zumindest bereichsweise schwenkbar um eine der Auflagefläche zugeordnete Drehachse lagerbar ist. Der Adaptereinheit ist ein nach Art einer Wippe ausgebildetes Lagerelement zur Anordnung zwischen dem Wischerarm und der Basisanschlussvorrichtung zugeordnet. Das Lagerelement ist schwenkbar an der Basisanschlussvorrichtung lagerbar.

Die Erfindung ermöglicht somit die Bereitstellung eines Wischblatts mit einer Adaptereinheit, an der der Wischerarm über ein Wippenartiges Lagerelement sicher und zuverlässig gelagert werden kann, sodass auf einfache Art und Weise auf die Verwendung eines aus dem Stand der Technik bekannten, bolzenartigen Fixierelements verzichtet werden kann. Darüber hinaus ermöglicht die Verwendung des Wippenartigen Lagerelements die Realisierung einer Adaptereinheit mit einer vergleichsweise reduzierten Bauhöhe.

Das Lagerelement ist bevorzugt über eine lose Verbindung mit der Basisanschlussvorrichtung verbindbar.

Somit kann eine schnelle und unkomplizierte Anlenkung der Wischleiste über das Lagerelement an dem Wischerarm ermöglicht werden.

Das Lagerelement weist bevorzugt einen bogenförmig ausgebildeten Lagerabschnitt zur schwenkbaren Lagerung auf der abgerundeten Auflagefläche auf.

Somit kann auf einfache Art und Weise sichergestellt werden, dass eine Schwenkbewegung des Lagerelements an der Basisanschlussvorrichtung ausschließlich über den bogenförmig ausgebildeten Lagerabschnitt und die abgerundete Auflagefläche erfolgt.

Gemäß einer Ausführungsform weist die Basisanschlussvorrichtung zwei laterale Begrenzungswände auf, die an dem Wandelement befestigt sind und mit diesem einen Aufnahmeraum zur Aufnahme eines axialen Endbereichs des Wischerarms ausbilden. Der Aufnahmeraum weist bevorzugt mindestens einen in einer quer zur Längsachse der Basisanschlussvorrichtung verlaufenden Richtung eingeengten Abschnitt auf, um eine Verschiebbarkeit des Wischerarms in axialer Richtung der Basisanschlussvorrichtung zumindest einzuschränken.

Die Erfindung ermöglicht somit die Realisierung einer soliden und robusten Verbindung zwischen dem Wischerarm und der Adaptereinheit in axialer Richtung der Basisanschlussvorrichtung.

Bevorzugt ist mindestens eine der lateralen Begrenzungswände durch mindestens zwei voneinander beabstandete, säulenartige Wandabschnitte ausgebildet.

Somit kann die laterale Begrenzungswand material- und kostensparend ausgebildet werden.

Gemäß einer Ausführungsform weist das Lagerelement mindestens einen in einer quer zu seiner Längsachse verlaufenden Richtung eingeengten Abschnitt zur Anordnung im Bereich des eingeengten Abschnitts der Basisanschlussvorrichtung auf, um eine Verschiebung des Lagerelements in axialer Richtung der Basisanschlussvorrichtung zumindest einzuschränken.

Die Erfindung ermöglicht somit die Realisierung einer soliden und robusten Verbindung zwischen dem Wischerarm und der Adaptereinheit in axialer Richtung der Basisanschlussvorrichtung.

Das Lagerelement weist bevorzugt mindestens eine laterale Wand auf, an der das Lagerelement in einer Richtung quer zu seiner Längsachse an der Basisanschlussvorrichtung verschiebbar ist.

Somit kann eine vergleichsweise reibungsarme Verschwenkung des Wischerarms an der Adaptereinheit ermöglicht werden.

Die mindestens eine laterale Wand bildet bevorzugt eine Rastnase zur Fixierung des Wischerarms aus.

Somit kann das Lagerelement sicher und zuverlässig an dem Wischerarm fixiert werden.

Das Lagerelement weist bevorzugt mindestens einen axialen Anschlag auf, gegen den ein axialer Endbereich des Wischerarms anlegbar ist.

Somit kann eine einfache und präzise Positionierung des Lagerelements am Wischerarm ermöglicht werden.

Gemäß einer Ausführungsform ist die Adaptereinheit Drehgelenkfrei ausgebildet.

Die Erfindung ermöglicht somit die Bereitstellung einer kostengünstigen Adaptereinheit mit einer vergleichsweise niedrigen Bauhöhe.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Adaptereinheit mit deckelartigem Halteglied zur Anlenkung an einem Wischerarm gemäß einer ersten Ausführungsform vorgesehen ist,
Fig. 2 eine perspektivische Ansicht eines Ausschnitts II des Wischblatts von Fig. 1 mit einem Wippenartigen Lagerelement im montierten Zustand, ohne das deckelartige Halteglied,
Fig. 3 die Anordnung von Fig. 2, ohne den Wischerarm,
Fig. 4 die Anordnung von Fig. 3, ohne das Wippenartige Lagerelement,
Fig. 5 eine perspektivische Ansicht des Wippenartigen Lagerelements von Fig. 2 und 3,
Fig. 6 eine Schnittansicht eines etwa zentralen Bereichs des Ausschnitts II des Wischblatts von Fig. 1, und
Fig. 7 eine Basisanschlussvorrichtung gemäß einer zweiten Ausführungsform.

### Beschreibung der Ausführungsbeispiele

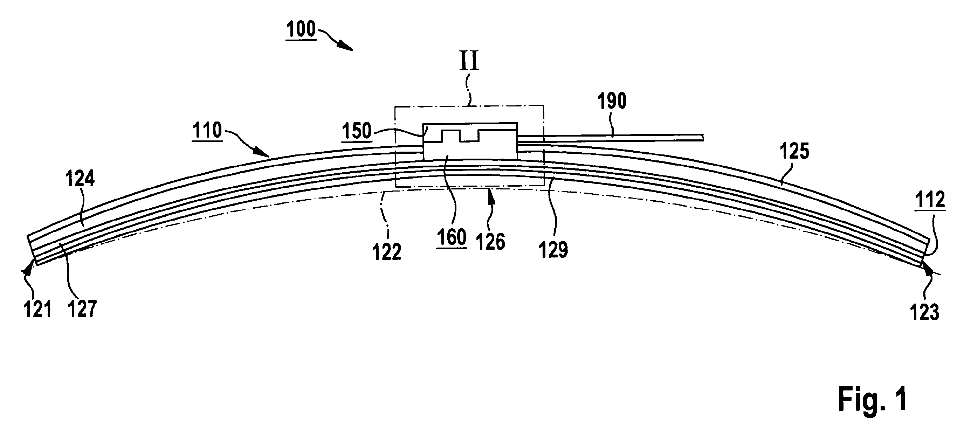

Fig. 1 zeigt ein illustrativ für einen Scheibenwischer 100 eines Kraftfahrzeugs ausgebildetes Wischblatt 110 mit einer Wischleiste 112, die eine über einen Kippsteg 127 mit einer Rückenleiste 124 verbundene Wischlippe 129 aufweist. An der Rückenleiste 124 ist ein optionaler Spoiler 125 vorgesehen.

Gemäß einer Ausführungsform ist das Wischblatt 110 in Flachbalkenbauweise ausgebildet, d. h. die Wischleiste 112 weist seitliche Längsnuten auf, die beispielsweise an der Rückenleiste 124 ausgebildet sind und in denen zwei Tragschienen, vorzugsweise Federschienen, angeordnet sind. Alternativ hierzu kann die Wischleiste 112 als Hohlprofil mit einem beispielsweise in der Rückenleiste 124 vorgesehenen, etwa zentralen Längskanal ausgebildet sein, in dem eine einzelne Tragschiene angeordnet ist.

An der Wischleiste 112 ist eine von einem optionalen, deckelartigen Fixierglied 150 abgedeckte Adaptereinheit 160 zur Anlenkung der Wischleiste 112 an einem Wischerarm 190 befestigt, mit dessen Hilfe das Wischblatt 110 zum Wischen über eine strichpunktiert dargestellte Scheibe 122, z. B. eine Kraftfahrzeugscheibe, geführt werden kann. Der Fixierdeckel 150 ist deshalb optional, da bei einer entsprechenden Auslegung der Adaptereinheit 160 und einer von dem Wischerarm 190 auf die Adaptereinheit 160 ausübbaren Anpresskraft auf eine Verwendung des Fixierdeckels 150 verzichtet werden kann.

Die Adaptereinheit 160 ist bevorzugt dauerhaft an der Wischleiste 112 befestigt, z. B. zumindest abschnittsweise in einer hierzu vorgesehenen Unterbrechung bzw. Aussparung des Spoilers 125. Unter "dauerhaft" ist im Kontext der vorliegenden Erfindung zu verstehen, dass keine Mittel zum Loslösen der Adaptereinheit 160 von der Wischleiste 112 vorgesehen sind, sodass ein gewaltfreies bzw. zerstörungsfreies Lösen bevorzugt nicht möglich ist. Die Wischleiste 112 mit der daran vorgesehenen Adaptereinheit 160 ist bevorzugt Drehgelenkfrei ausgebildet.

In Fig. 1 ist das Wischblatt 110 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d. h. etwa im Bereich der Adaptereinheit 160, noch von der Scheibe 122 beabstandet ist. Wird über den Wischerarm 190 eine vorgesehene Anpresskraft auf die Adaptereinheit 160 ausgeübt, legt sich die Wischleiste 112 an der Scheibe 122 an. Hierbei wird ein gleichmäßiger Anpressdruck über die gesamte Wischblattlänge erreicht, auch wenn sich die Scheibenkrümmung im Verlauf der Wischbewegung ändert.

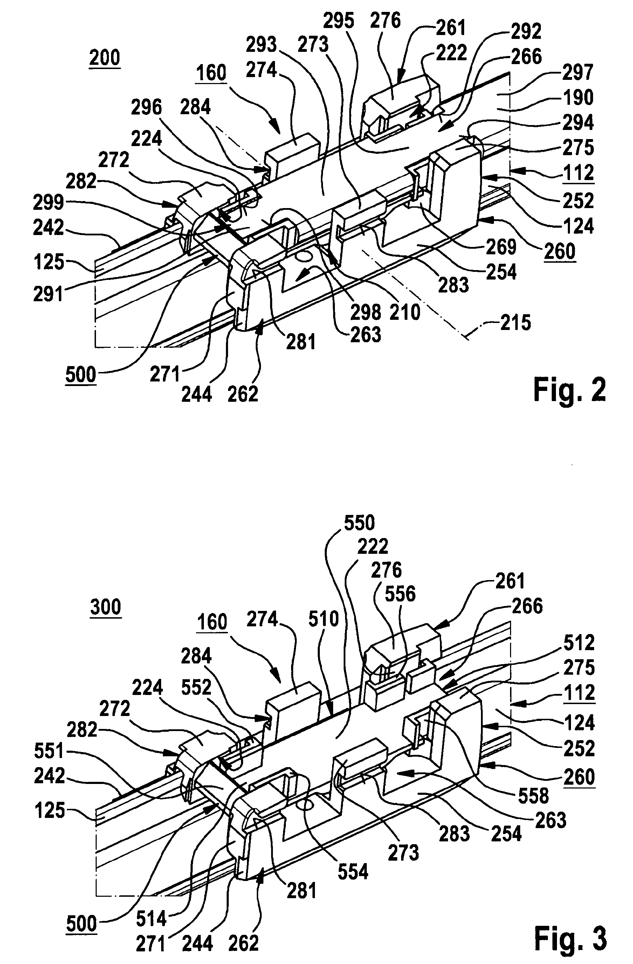

Fig. 2 zeigt eine Anordnung 200, die einen in Fig. 1 mit II gekennzeichneten Ausschnitt des Wischblatts 110 von Fig. 1 mit der Wischleiste 112 und der Adaptereinheit 160 gemäß einer Ausführungsform im montierten Zustand illustriert, wobei das Wischblatt 110 illustrativ am Wischerarm 190 angelenkt ist. Zur Verdeutlichung einer beispielhaften Ausgestaltung der Adaptereinheit 160 und des Wischerarms 190 wurde jedoch auf eine Abbildung des optionalen, deckelartigen Fixierglieds 150 von Fig. 1 verzichtet.

Der Wischerarm 190 hat einen axialen Endbereich 299, an dem gemäß einer Ausführungsform in Richtung des Wischerarms 190 gesehen, d. h. in Fig. 2 von links nach rechts, ein erster eingeengter, d. h. mit reduzierter Breite ausgebildeter Abschnitt 291 und ein zweiter eingeengter, d. h. mit reduzierter Breite ausgebildeter Abschnitt 295 ausgebildet sind. Hierbei wird der erste eingeengte Abschnitt 291 beispielhaft durch laterale Aussparungen 296, 298 und der zweite eingeengte Abschnitt 295 durch laterale Aussparungen 292, 294 ausgebildet. Zwischen diesen eingeengten Abschnitten 291, 295 ist illustrativ ein vergleichsweise breiterer Bereich 293 vorgesehen. Darüber hinaus schließt an den eingeengten Abschnitt 295 ein weiterer nicht eingeengter Bereich 297 d. h. ein mit einer unreduzierten Breite versehener Bereich, an. Illustrativ bilden die eingeengten Abschnitte 291, 295 und der Bereich 293 eine Kreuzform aus.

Die Adaptereinheit 160 hat beispielhaft einen Anlenkabschnitt 252 zur Anlenkung der Wischleiste 112 am Wischerarm 190 von Fig. 1, einen Befestigungsabschnitt 254 zur Befestigung der Adaptereinheit 160 an der Wischleiste 112, und ein z. B. nach Art einer Wippe ausgebildetes Lagerelement 500 zur Lagerung des Wischerarms 190 am Anlenkabschnitt 252. Der Anlenkabschnitt 252 und der Befestigungsabschnitt 254 bilden illustrativ eine Basisanschlussvorrichtung 260 aus.

Gemäß einer Ausführungsform weist der Befestigungsabschnitt 254 ein erstes laterales, krallenförmig ausgebildetes Halteglied 242 und ein zweites laterales, krallenförmig ausgebildetes Halteglied 244 auf. Diese sind z. B. an der Rückenleiste 124 der Wischleiste 112 bzw. an daran angeordneten Trag- bzw. Federschienen verschweißt, z. B. mittels Ultraschallschweißen. Es wird jedoch darauf hingewiesen, dass ein Verschweißen des Befestigungsabschnitts 254 an der Wischleiste 112 lediglich beispielhaft beschrieben ist und nicht als Einschränkung der vorliegenden Erfindung zu verstehen ist. Vielmehr können auch alternative Verbindungs- bzw. Befestigungsverfahren Anwendung finden, z. B. kann der Befestigungsabschnitt 254 an die Wischleiste 112 angeklebt werden.

Des Weiteren wird darauf hingewiesen, dass die zweiteilige Ausgestaltung der Basisanschlussvorrichtung 260 mit dem Anlenkabschnitt 252 und dem Befestigungsabschnitt 254 ebenfalls nur beispielhaften Charakter hat und nicht als Einschränkung der Erfindung dient. Vielmehr kann die Basisanschlussvorrichtung 260 auch als einstückiges Bauteil ausgeführt sein, das z. B. durch Kunststoffspritzen an die Wischleiste 112 angeformt ist. Deshalb beziehen sich die Begriffe "Befestigungsabschnitt" und "Anlenkabschnitt" lediglich auf unterschiedliche funktionale Bereiche der Basisanschlussvorrichtung 260, aber nicht zwangsweise auf separate Bauteile.

Gemäß einer Ausführungsform weist der Anlenkabschnitt 252 eine etwa U-förmige Struktur auf, mit einem der Wischleiste 112 zugewandten Wandelement 263, das nachfolgend zur Vereinfachung der Beschreibung auch als "Bodenwand" bezeichnet wird, und daran befestigten und/oder angeformten, parallel zur axialen Erstreckung der Wischleiste 112 ausgerichteten, lateralen Begrenzungswänden 261, 262, die nachfolgend zur Vereinfachung der Beschreibung auch als "Seitenwände" bezeichnet werden. Die Seitenwände 261, 262 sind bevorzugt derart voneinander beabstandet, dass ein Seitenspiel des in der Adaptereinheit 160 angeordneten Wischerarms 190 im Bereich vorgegebener Toleranzen liegt, um z. B. eine Verkantung des Wischerarms 190 in der Adaptereinheit 160 zu verhindern und somit eine gewünschte Funktionalität des Wischblatts 110 von Fig. 1 zu gewährleisten.

Die Bodenwand 263 und die Seitenwände 261, 262 bilden illustrativ einen Aufnahmeraum 266 aus, in dem beispielhaft der axiale Endbereich 299 des Wischerarms 190 angeordnet ist. Der Raum 266 ist in Fig. 1 von dem optionalen, deckelartigen Fixierglied 150 abgedeckt, das zur Fixierung des Wischerarms 190 an der Adaptereinheit 160 vorgesehen sein kann. Gemäß einer Ausführungsform ist der optionale Fixierdeckel 150 an der Basisanschlussvorrichtung 260 befestigt bzw. befestigbar, z. B. durch ein Einrasten in Rastnuten 281, 283 und 282, 284, die illustrativ an den Seitenwänden 262 bzw. 261 vorgesehen sind.

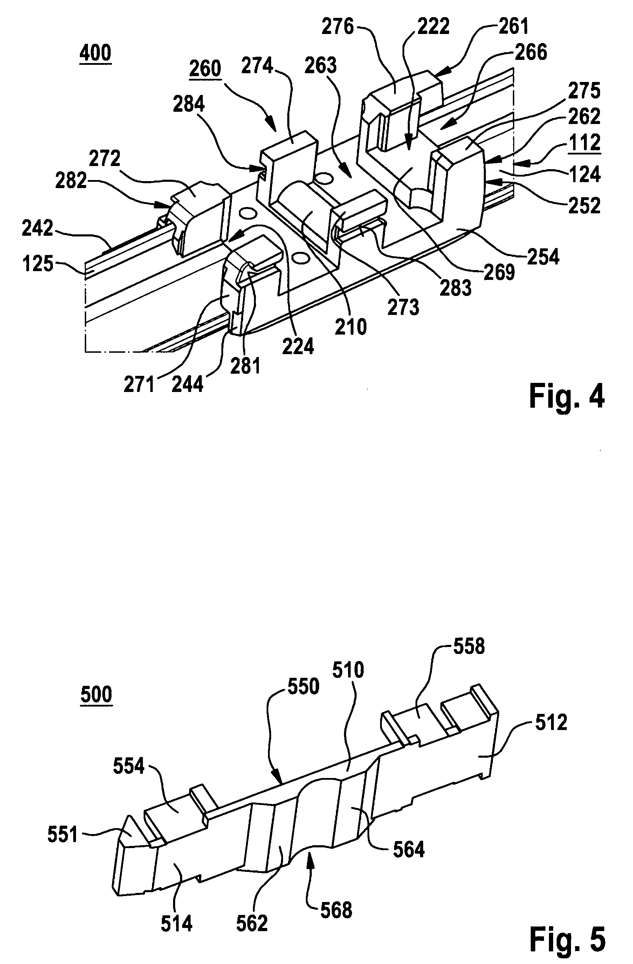

An der Bodenwand 263 ist illustrativ eine abgerundete Auflagefläche 210 für den Wischerarm 190 vorgesehen, auf der der Wischerarm 190 zumindest bereichsweise schwenkbar um eine der Auflagefläche 210 zugeordnete Drehachse 215 gelagert ist. Hierzu ist beispielhaft am axialen Endbereich 299 des Wischerarms 190 das Lagerelement 500 fixiert, das schwenkbar an der Basisanschlussvorrichtung 260 gelagert ist und somit zwischen dem Wischerarm 190 bzw. dessen axialem Endbereich 299 und der Basisanschlussvorrichtung 260 angeordnet ist. Das Lagerelement 500 wird unten bei Fig. 3 und 5 weiter beschrieben. Darüber hinaus ist an der Bodenwand 263 in Richtung des Wischerarms 190 gesehen illustrativ ein vergleichsweise erhöhter Abschnitt 269 zur Auflage des Wischerarms 190 ausgebildet.

Die Seitenwände 261, 262 sind senkrecht zur axialen Richtung der Wischleiste 112 bzw. der Basisanschlussvorrichtung 260 derart voneinander beabstandet, dass ein Seitenspiel des in der Adaptereinheit 160 angeordneten Wischerarms 190 im Bereich vorgegebener Toleranzen liegt. Darüber hinaus sind die Seitenwände 261, 262 illustrativ unterbrochen, d. h. nicht durchgehend ausgebildet, wobei die Seitenwände 261, 262 beispielhaft jeweils von drei in axialer Richtung der Adaptereinheit 160 voneinander beabstandeten, säulenartigen Wandabschnitten 272, 274, 276 bzw. 271, 273, 275 ausgebildet werden. Diese ermöglichen bei der Herstellung der Basisanschlussvorrichtung 260 eine Material- bzw.

Werkstoffeinsparung, die insbesondere bei hohen Stückzahlen in der Herstellung der Adaptereinheit 160 vorteilhaft ist, jedoch keine Auswirkungen auf die Funktionsweise der Adaptereinheit 160 haben. Dennoch ist die vorliegende Erfindung weder auf durchgehende, noch auf unterbrochene Seitenwände 261, 262 beschränkt.

Illustrativ liegt der Wandabschnitt 271 quer zur Längserstreckung bzw. Längsachse der Basisanschlussvorrichtung 260 gesehen dem Wandabschnitt 272 gegenüber. Analog hierzu liegt der Wandabschnitt 273 dem Wandabschnitt 274 und der Wandabschnitt 275 dem Wandabschnitt 276 gegenüber. Hierbei ist der Wandabschnitt 273 gemäß einer Ausführungsform vergleichsweise weiter von dem gegenüberliegenden Wandabschnitt 274 beabstandet, als die Wandabschnitte 271, 275 von den gegenüberliegenden Wandabschnitten 272 bzw. 276. Dementsprechend bildet der Aufnahmeraum 266 in einer quer zur Längsachse der Basisanschlussvorrichtung 260 verlaufenden Richtung einen ersten eingeengten Abschnitt 222 zwischen den Wandabschnitten 275, 276 und einen zweiten eingeengten Abschnitt 224 zwischen den Wandabschnitten 271, 272.

Bei einer beispielhaften Fixierung der Adaptereinheit 160 an dem Wischerarm 190 wird zunächst das Lagerelement 500 an dem axialen Endbereich 299 des Wischerarms 190 fixiert. Dann wird der axiale Endbereich 299 mit dem daran fixierten Lagerelement 500 derart in dem Aufnahmeraum 266 der Basisanschlussvorrichtung auf der Auflagefläche 210 und dem erhöhten Abschnitt 269 angeordnet, dass die eingeengten Abschnitte 291, 295 des Wischerarms 190 im Bereich der eingeengten Abschnitte 224 bzw. 222 des Aufnahmeraums 266 positioniert sind, um eine Verschiebbarkeit des Wischerarms 190 in axialer Richtung der Basisanschlussvorrichtung 260 zumindest einzuschränken. Hierbei kann die Wischleiste 112 durch eine vom Wischerarm 190 ausgeübte Anpresskraft gegen eine Auf- und Abbewegung - in Fig. 2 hoch und runter- gesichert werden, wobei seitliche und axiale Bewegungen des Wischerarms 190 relativ zur Adaptereinheit 160 durch deren Seitenwände 261, 262 beschränkt werden. Darüber hinaus kann bei Bedarf der optionale Fixierdeckel 150 wie oben beschrieben an der Adaptereinheit 160 befestigt werden.

Fig. 3 zeigt eine Anordnung 300, die im Wesentlichen der Anordnung 200 von Fig. 2 entspricht. Allerdings wurde bei der Anordnung 300 zur Verdeutlichung einer beispielhaften Ausgestaltung des Wippenartigen Lagerelements 500 von Fig. 2 auf eine Abbildung des bei der Anordnung 200 gezeigten Wischerarms 190 verzichtet.

Wie aus Fig. 3 ersichtlich, ist das Lagerelement 500 über eine lose Verbindung mit der Basisanschlussvorrichtung 260 verbunden. Im Kontext der vorliegenden Erfindung bedeutet der Begriff "lose Verbindung", dass weder am Lagerelement 500, noch an der Basisanschlussvorrichtung 260 Mittel zur Befestigung bzw. zum Zurückhalten des Lagerelements 500 am bzw. im Aufnahmeraum 266 vorgesehen sind.

Gemäß einer Ausführungsform weist das nach Art einer Wippe ausgebildete Lagerelement 500 eine der Basisanschlussvorrichtung 260 zugewandte Bodenwand 510 auf, an der mindestens ein axialer Anschlag 551 ausgebildet ist, gegen den der axiale Endbereich 299 des Wischerarms 190 wie in Fig. 2 gezeigt anlegbar ist. Darüber hinaus weist das Lagerelement 500 in einer quer zu seiner Längsachse verlaufenden Richtung ausgehend von dem axialen Anschlag 551 gesehen einen ersten eingeengten Abschnitt 512 und einen zweiten eingeengten Abschnitt 514 auf, zwischen denen ein vergleichsweise breiterer Bereich 550 vorgesehen ist. Die eingeengten Abschnitte 512, 514 und der Bereich 550 bilden beispielhaft einen kreuzförmigen Grundriss der Bodenwand 510 aus.

Illustrativ weist das Lagerelement 500 vier laterale Wände bzw. Anlaufflächen 552, 554, 556, 558 auf, die an der Bodenwand 510 befestigt bzw. an diese angeformt sind und an denen das Lagerelement 500 in einer Richtung quer zu seiner Längsachse - in Fig. 3 hoch und runter - an der Basisanschlussvorrichtung 260 verschiebbar ist. Hierbei sind die lateralen Wände 552, 554 beispielhaft an den Wandabschnitten 272 bzw. 271 und die lateralen Wände 556, 558 beispielhaft an den Wandabschnitten 276 bzw. 275 verschiebbar gelagert. Gemäß einer Ausführungsform bilden die lateralen Wände 552, 554, 556, 558 Rastnasen zur Fixierung des Wischerarms 190 von Fig. 2 aus.

Nach der bei Fig. 2 beschriebenen, beispielhaften Fixierung der Adaptereinheit 160 an dem Wischerarm 190 sind die eingeengten Abschnitte 291, 295 des Wischerarms 190 im Bereich der eingeengten Abschnitte 514 bzw. 512 des Lagerelements 500 angeordnet, die wiederrum im Bereich der eingeengten Abschnitte 224 bzw. 222 des Aufnahmeraums 266 der Basisanschlussvorrichtung 260 angeordnet sind. Somit kann eine Verschiebung des Wischerarms 190 im Lagerelement 500 bzw. des Lagerelements 500 im Aufnahmeraum 266 in axialer Richtung der Basisanschlussvorrichtung 260 gesehen zumindest eingeschränkt werden.

Es wird jedoch darauf hingewiesen, dass zwischen den lateralen Wänden 552, 554 und den Wandabschnitten 272 bzw. 271 sowie zwischen den lateralen Wände 556, 558 und den Wandabschnitten 276 bzw. 275 in axialer Richtung der Basisanschlussrichtung 260 gesehen ein vorgegebenes Spiel vorhanden ist, um ein Verklemmen des Lagerelements 500 an der Basisanschlussvorrichtung 260 bei einem Verschwenken des Lagerelements 500 an der Basisanschlussvorrichtung 260 zu verhindern. Darüber hinaus wird darauf hingewiesen, dass auch die Darstellung bzw. Beschreibung von jeweils zwei eingeengten Abschnitten 512, 514 bzw. 222, 224 (und 295, 291 des Wischerarms 190 in Fig. 2) lediglich beispielhaften Charakter hat und nicht als Einschränkung der Erfindung zu verstehen ist. Diese könnte vielmehr auch mit einer größeren Anzahl von eingeengten Abschnitten oder Äquivalenten, als auch nur mit den eingeengten Abschnitten 512 und 222 (sowie 295 des Wischerarms 190 von Fig. 3) oder geeigneten Äquivalenten realisiert werden.

Fig. 4 zeigt eine Anordnung 400, die im Wesentlichen der Anordnung 300 von Fig. 3 entspricht. Allerdings wurde bei der Anordnung 400 zur Verdeutlichung einer beispielhaften Ausgestaltung der Basisanschlussvorrichtung 260 von Fig. 3 auf eine Abbildung des bei der Anordnung 300 gezeigten, Wippenartigen Lagerelements 500 von Fig. 3 verzichtet.

Fig. 4 verdeutlicht die illustrativ nach Art einer Zylindersegmentfläche ausgebildete, abgerundete Auflagefläche 210 der Basisanschlussvorrichtung 260 sowie den erhöhten Abschnitt 269. Dieser hat ausgehend von der Bodenwand 263 bevorzugt zumindest dieselbe Höhe wie die abgerundete Auflagefläche 210.

Fig. 5 zeigt das Wippenartige Lagerelement 500 von Fig. 2 bis 4 zur Verdeutlichung des an der Bodenwand 510 vorgesehenen axialen Anschlags 551 und der als Anlaufflächen daran ausgebildeten Wände 554, 558. Darüber hinaus sind gemäß einer Ausführungsform an einer in Fig. 2 bis 4 der Bodenwand 263 der Basisanschlussvorrichtung 260 von Fig. 2 bis 4 zugewandten Seite der Bodenwand 510 zwei Querstege 562, 564 vorgesehen, die illustrativ einen bogenförmig ausgebildeten Lagerabschnitt 568 zur schwenkbaren Lagerung auf der abgerundeten Auflagefläche 210 der Basisanschlussvorrichtung 260 ausbilden.

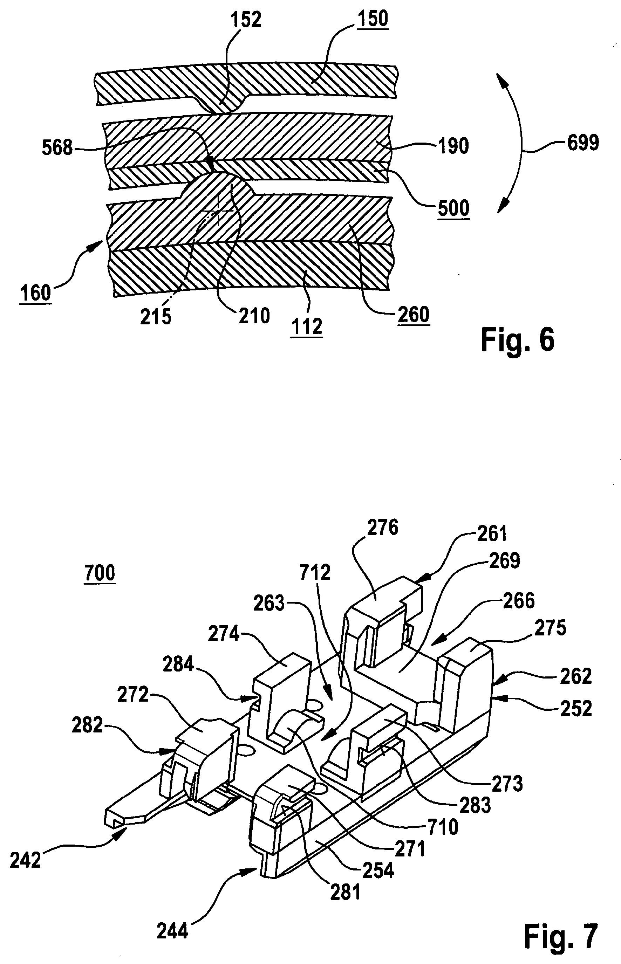

Fig. 6 zeigt eine schematische Schnittansicht der Anordnung 200 von Fig. 2 mit dem optionalen Fixierdeckel 150, der illustrativ eine abgerundete Auflagefläche 152 aufweist, die nach einer entsprechenden Montage auf dem Wischerarm 190 von Fig. 1 und 2 aufliegt. Hierbei ist der bogenförmig ausgebildeten Lagerabschnitt 568 von Fig. 5 schwenkbar auf der abgerundeten Auflagefläche 210 der Basisanschlussvorrichtung 260 gelagert, wie oben bei Fig. 5 beschrieben. Somit kann der Wischerarm 190 über das Lagerelement 500 um die Drehachse 215 der Auflagefläche 210 sowie eine entsprechende Drehachse der Auflagefläche 152 innerhalb vorgegebener Grenzen in Richtung eines Pfeils 699 verschwenkt werden.

Fig. 7 zeigt eine Basisanschlussvorrichtung 700 gemäß einer alternativen Ausführungsform. Diese hat im Gegensatz zur Basisanschlussvorrichtung 260 von Fig. 2 bis 4 nicht die durchgehende, abgerundete Auflagefläche 210, sondern eine mit einer beispielhaft etwa zentralen Unterbrechung 712 versehene, abgerundete Auflagefläche 710.

## Patentansprüche

1. Wischblatt (110) für einen Scheibenwischer (100), mit einer Wischleiste (112) und einer Adaptereinheit (160) zur Anlenkung der Wischleiste (112) an einem Wischerarm (190), wobei die Adaptereinheit (160) eine an der Wischleiste (112) befestigte Basisanschlussvorrichtung (260) mit einem der Wischleiste (112) zugewandten Wandelement (263) aufweist, an dem mindestens eine abgerundete Auflagefläche (210) für den Wischerarm (190) vorgesehen ist, auf der der Wischerarm (190) zumindest bereichsweise schwenkbar um eine der Auflagefläche (210) zugeordnete Drehachse (215) lagerbar ist, **dadurch gekennzeichnet, dass** der Adaptereinheit (160) ein nach Art einer Wippe ausgebildetes Lagerelement (500) zur Anordnung zwischen dem Wischerarm (190) und der Basisanschlussvorrichtung (260) zugeordnet ist, wobei das Lagerelement (500) schwenkbar an der Basisanschlussvorrichtung (260) lagerbar ist.

2. Wischblatt nach Anspruch 1, **dadurch gekennzeichnet, dass** das Lagerelement (500) über eine lose Verbindung mit der Basisanschlussvorrichtung (260) verbindbar ist.

3. Wischblatt nach Anspruch 1 oder 2, **dadurch gekennzeichnet, dass** das Lagerelement (500) einen bogenförmig ausgebildeten Lagerabschnitt (568) zur schwenkbaren Lagerung auf der abgerundeten Auflagefläche (210) aufweist.

4. Wischblatt nach einem der vorhergehenden Ansprüche, **dadurch gekennzeichnet, dass** die Basisanschlussvorrichtung (260) zwei laterale Begrenzungswände (261, 262) aufweist, die an dem Wandelement (263) befestigt sind und mit diesem einen Aufnahmeraum (266) zur Aufnahme eines axialen Endbereichs (299) des Wischerarms (190) ausbilden, wobei der Aufnahmeraum (266) mindestens einen in einer quer zur Längsachse der Basisanschlussvorrichtung (260) verlaufenden Richtung eingeengten Abschnitt (222) aufweist, um eine Verschiebbarkeit des Wischerarms (190) in axialer Richtung der Basisanschlussvorrichtung (260) zumindest einzuschränken.

5. Wischblatt nach Anspruch 4, **dadurch gekennzeichnet, dass** mindestens eine der lateralen Begrenzungswände (261, 262) durch mindestens zwei voneinander beabstandete, säulenartige Wandabschnitte (274, 276) ausgebildet ist.

6. Wischblatt nach Anspruch 4 oder 5, **dadurch gekennzeichnet, dass** das Lagerelement (500) mindestens einen in einer quer zu seiner Längsachse verlaufenden Richtung eingeengten Abschnitt (512) zur Anordnung im Bereich des eingeengten Abschnitts (222) der Basisanschlussvorrichtung (260) aufweist, um eine Verschiebung des Lagerelements (500) in axialer Richtung der Basisanschlussvorrichtung (260) zumindest einzuschränken.

7. Wischblatt nach einem der vorhergehenden Ansprüche, **dadurch gekennzeichnet, dass** das Lagerelement (500) mindestens eine laterale Wand (552, 554, 556, 558) aufweist, an der das Lagerelement (500) in einer Richtung quer zu seiner Längsachse an der Basisanschlussvorrichtung (260) verschiebbar ist.

8. Wischblatt nach Anspruch 7, **dadurch gekennzeichnet, dass** die mindestens eine laterale Wand (552, 554, 556, 558) eine Rastnase zur Fixierung des Wischerarms (190) ausbildet.

9. Wischblatt nach einem der vorhergehenden Ansprüche, **dadurch gekennzeichnet, dass** das Lagerelement (500) mindestens einen axialen Anschlag (551) aufweist, gegen den ein axialer Endbereich (299) des Wischerarms (190) anlegbar ist.

10. Wischblatt nach einem der vorhergehenden Ansprüche, **dadurch gekennzeichnet, dass** die Adaptereinheit (160) Drehgelenkfrei ausgebildet ist.

## Claims

1. Wiper blade (110) for a windscreen wiper (100), with a wiper strip (112) and an adapter unit (160) for coupling the wiper strip (112) to a wiper arm (190), wherein the adapter unit (160) has a base connection device (260), which is fastened to the wiper strip (112), with a wall element (263) which faces the wiper strip (112) and on which is provided at least one rounded supporting surface (210) for the wiper arm (190), on which the wiper arm (190) can be mounted so as to be pivotable at least in regions about an axis of rotation (215) assigned to the supporting surface (210), **characterized in that** the adapter unit (160) is assigned a bearing element (500), which is designed in the manner of a rocker, for arrangement between the wiper arm (190) and the base connection device (260), wherein the bearing element (500) can be mounted pivotably on the base connection device (260).

2. Wiper blade according to Claim 1, **characterized in that** the bearing element (500) is connectable to the base connection device (260) via a loose connection.

3. Wiper blade according to Claim 1 or 2, **characterized in that** the bearing element (500) has a bearing portion (568) of arcuate design for the pivotable mounting on the rounded supporting surface (210).

4. Wiper blade according to one of the preceding claims, **characterized in that** the base connection device (260) has two lateral boundary walls (261, 262) which are fastened to the wall element (263) and, together with the latter, form a receiving space (266) for receiving an axial end region (299) of the wiper arm (190), wherein the receiving space (266) has at least one portion (222) which is constricted in a direction running transversely with respect to the longitudinal axis of the base connection device (260), in order at least to limit displaceability of the wiper arm (190) in the axial direction of the base connection device (260).

5. Wiper blade according to Claim 4, **characterized in that** at least one of the lateral boundary walls (261, 262) is formed by at least two column-like wall portions (274, 276) which are spaced apart from each other.

6. Wiper blade according to Claim 4 or 5, **characterized in that** the bearing element (500) has at least one portion (512) which is constricted in a direction running transversely with respect to the longitudinal axis thereof for arrangement in the region of the constricted portion (222) of the base connection device (260) in order at least to restrict displacement of the bearing element (500) in the axial direction of the base connection device (260).

7. Wiper blade according to one of the preceding claims, **characterized in that** the bearing element (500) has at least one lateral wall (552, 554, 556, 558) at which the bearing element (500) is displaceable in a direction transverse with respect to the longitudinal axis thereof on the base connection device (260).

8. Wiper blade according to Claim 7, **characterized in that** the at least one lateral wall (552, 554, 556, 558) forms a latching lug for securing the wiper arm (190).

9. Wiper blade according to one of the preceding claims, **characterized in that** the bearing element (500) has at least one axial stop (551) against which an axial end region (299) of the wiper arm (190) can be placed.

10. Wiper blade according to one of the preceding claims, **characterized in that** the adapter unit (160) is formed without a rotary joint.

## Revendications

1. Balai d'essuie-glace (110) pour un essuie-glace (100), comprenant une raclette de balai d'essuie-glace (112) et une unité d'adaptateur (160) pour l'articulation de la raclette de balai d'essuie-glace (112) à un bras d'essuie-glace (190), l'unité d'adaptateur (160) présentant un dispositif de raccordement de base (260) fixé à la raclette de balai d'essuie-glace (112), avec un élément de paroi (263) tourné vers la raclette de balai d'essuie-glace (112), au niveau duquel est prévue au moins une surface d'appui arrondie (210) pour le bras d'essuie-glace (190), sur laquelle le bras d'essuie-glace (190) peut être supporté au moins en partie de manière à pouvoir pivoter autour d'un axe de rotation (215) associé à la surface d'appui (210), **caractérisé en ce que** l'unité d'adaptateur (160) est associée à un élément de palier (500) réalisé à la manière d'une bascule et destiné à être disposé entre le bras d'essuie-glace (190) et le dispositif de raccordement de base (260), l'élément de palier (500) pouvant être supporté de manière pivotante sur le dispositif de raccordement de base (260).

2. Balai d'essuie-glace selon la revendication 1, **caractérisé en ce que** l'élément de palier (500) peut être connecté par le biais d'une connexion lâche au dispositif de raccordement de base (260).

3. Balai d'essuie-glace selon la revendication 1 ou 2, **caractérisé en ce que** l'élément de palier (500) présente une portion de palier (568) réalisée en forme d'arc pour le support sur palier pivotant sur la surface d'appui arrondie (210).

4. Balai d'essuie-glace selon l'une quelconque des revendications précédentes, **caractérisé en ce que** le dispositif de raccordement de base (260) présente deux parois de limitation latérales (261, 262), lesquelles sont fixées à l'élément de paroi (263) et constituent avec celui-ci un espace de réception (266) pour recevoir une région d'extrémité axiale (299) du bras d'essuie-glace (190), l'espace de réception (266) présentant au moins une portion rétrécie (222) dans une direction s'étendant transversalement à l'axe longitudinal du dispositif de raccordement de base (260), afin d'au moins limiter un déplacement du bras d'essuie-glace (190) dans la direction axiale du dispositif de raccordement de base (260).

5. Balai d'essuie-glace selon la revendication 4, **caractérisé en ce qu'**au moins l'une des parois de limitation latérales (261, 262) est réalisée par au moins deux portions de paroi de type colonne espacées l'une de l'autre (274, 276).

6. Balai d'essuie-glace selon la revendication 4 ou 5, **caractérisé en ce que** l'élément de palier (500) présente au moins une portion rétrécie (512) dans une direction s'étendant transversalement à son axe longitudinal, destinée à être disposée dans la région de la portion rétrécie (222) du dispositif de raccordement de base (260), afin d'au moins limiter un déplacement de l'élément de palier (500) dans la direction axiale du dispositif de raccordement de base (260).

7. Balai d'essuie-glace selon l'une quelconque des revendications précédentes, **caractérisé en ce que** l'élément de palier (500) présente au moins une paroi latérale (552, 554, 556, 558) au niveau de laquelle l'élément de palier (500) peut être déplacé dans une direction transversalement à son axe longitudinal sur le dispositif de raccordement de base (260).

8. Balai d'essuie-glace selon la revendication 7, **caractérisé en ce que** l'au moins une paroi latérale (552, 554, 556, 558) constitue un ergot d'encliquetage pour la fixation du bras d'essuie-glace (190).

9. Balai d'essuie-glace selon l'une quelconque des revendications précédentes, **caractérisé en ce que** l'élément de palier (500) présente au moins une butée axiale (551) contre laquelle une région d'extrémité axiale (299) du bras d'essuie-glace (190) peut être appliquée.

10. Balai d'essuie-glace selon l'une quelconque des revendications précédentes, **caractérisé en ce que** l'unité d'adaptateur (160) est réalisée sans articulation pivotante.
